# EUROPÄISCHE PATENTSCHRIFT

(11) **EP 3 921 884 B1**
(45) Veröffentlichungstag und Bekanntmachung des Hinweises auf die Patenterteilung: **19.04.2023**
(21) Anmeldenummer: 20712929.7
(22) Anmeldetag: 19.03.2020
(51) Int. Cl.: H01M 10/04, H01M 50/202, H01M 10/613, H01M 10/653

(54) **VERFAHREN ZUM HERSTELLEN EINER BATTERIEANORDNUNG**
METHOD FOR PRODUCING A BATTERY ARRANGEMENT
PROCÉDÉ DE FABRICATION D'UN ENSEMBLE BATTERIE

(30) Priorität: 15.04.2019 DE 102019109905
(43) Veröffentlichungstag der Anmeldung: 15.12.2021
(73) Patentinhaber: Atlas Copco IAS GmbH, 75015 Bretten (DE)
(72) Erfinder: TOLK, Marten, 76646 Bruchsal (DE); MÖSSNER, Udo, 75228 Ispringen (DE)
(74) Vertreter: Patentanwälte Bregenzer und Reule Partnerschaftsgesellschaft mbB
(86) Internationale Anmeldenummer: PCT/EP2020/057571
(87) Internationale Veröffentlichungsnummer: WO 2020/212066

(56) Entgegenhaltungen:
- EP-A1- 2 104 121
- WO-A1-2020/165012
- DE-A1-102011 076 578
- DE-A1-102018 005 234

## Beschreibung

Die Erfindung betrifft ein Verfahren zum Herstellen einer Batterieanordnung. Batterien für elektrisch betriebene Kraftfahrzeuge müssen große Mengen Energie speichern und in kurzer Zeit geladen werden können. Insbesondere beim Laden erwärmt sich die Batterie und muss oftmals gekühlt werden. Zu diesem Zweck ist an die die Batterie aufnehmende Batteriewanne ein Kühler angeschlossen, der Wärme von der Batteriewanne ableitet. Eine effiziente Kühlung der Batterie setzt dann voraus, dass die Batterie und die Batteriewanne thermisch miteinander gekoppelt sind. Zu diesem Zweck wird ein Hohlraum zwischen der Batterie und der Batteriewanne mit einer Wärme sehr gut leitenden Wärmeleitpaste ausgefüllt, die in der Batterie entstehende Wärme zur Wanne ableitet, von wo aus sie in den Kühler abgeleitet wird. Um eine möglichst gute Wärmeleitung zu erzielen, muss der Spalt zwischen dem Batterieboden und dem Wannenboden möglichst großflächig mit einer sich vom Batterieboden zum Wannenboden erstreckenden Schicht der Wärmeleitpaste ausgefüllt werden. Wird zu wenig Wärmeleitpaste aufgetragen, ist die Wärmeleitung ungenügend. Der Auftrag einer zu großen Menge an Wärmeleitpaste ist jedoch ebenfalls nachteilig, da die Wärmeleitpaste sehr teuer ist. Die Festlegung der aufzutragenden Menge an Wärmeleitpaste wird zusätzlich dadurch erschwert, dass der Wannenboden nicht ideal glatt ist und Fertigungstoleranzen unterliegt. Auch der Batterieboden kann aufgrund von Fertigungstoleranzen Unebenheiten aufweisen.

Ein Verfahren zum Herstellen einer Batterieanordnung ist aus der DE 10 2017 204 412 A1 bekannt. Bei diesem Verfahren wird mehr Füllmaterial auf den Wannenboden aufgebracht als zum Ausfüllen des Spalts erforderlich ist, um eine vollständige Benetzung des Batteriebodens zu gewährleisten. Dies hat zur Folge, dass beim Einsetzen der Batterie überschüssiges Material verdrängt werden muss. Aus der DE 10 2018 005 234 A1 ist ein Verfahren zum Herstellen einer Batterieanordnung bekannt, bei dem die Höhe des Spalts zwischen dem Wannenboden und dem Batterieboden indirekt über eine Messung der Höhe der einzelnen Batteriezellen bestimmt wird. Eine ähnliche Lösung lehrt die DE 10 2013 007 252 B3. Das dort beschriebene Verfahren sieht vor, dass Wärmeleitpaste auf die Unterseiten von Energiespeichern aufgetragen wird, während diese mit ihren Oberseiten auf einer Ausrichtfläche aufliegen. Die Ausrichtfläche steht aber in keiner Beziehung zum Wannenboden.

Es ist daher Aufgabe der Erfindung, ein Verfahren der eingangs genannten Art derart weiterzubilden, dass der Auftrag von Wärmeleitpaste verbessert wird.

Diese Aufgabe wird erfindungsgemäß durch ein Verfahren mit den Merkmalen des Anspruchs 1 gelöst. Vorteilhafte Weiterbildungen der Erfindung sind Gegenstand der abhängigen Ansprüche. Zur Durchführung des erfindungsgemäßen Verfahrens wird vorzugsweise eine Vorrichtung mit den Merkmalen des nebengeordneten Anspruchs 15 herangezogen.

Der Erfindung liegt der Gedanke zugrunde, vor dem Auftrag der Wärmeleitpaste den Wannenboden abzutasten und zumindest an mehreren ersten Messpunkten den Abstand zwischen dem Wannenboden und einer durch Auflagepunkte, an denen die Batterie auf der Batteriewanne aufliegt, aufgespannten Auflageebene zu messen. Die Auflagepunkte und damit die Auflageebene werden dabei als vorgegeben angenommen. Wird der Batterieboden als ideale ebene Fläche angenommen, so ist die Breite des Spalts zwischen dem Batterieboden und dem Wannenboden durch den an möglichst vielen ersten Messpunkten gemessenen Abstand des Wannenbodens zur Auflageebene bestimmt. Der Auftrag der Wärmeleitpaste erfolgt dann in Abhängigkeit von den ermittelten Abständen zwischen dem Wannenboden und der Auflageebene, so dass eine genauere Dosierung der Wärmeleitpaste möglich ist. Die Wärmeleitpaste wird vorzugsweise auf den Wannenboden aufgetragen. Es ist jedoch auch möglich, die Wärmeleitpaste auf den Batterieboden aufzutragen und die Batterie mit aufgetragener Wärmeleitpaste in die Batteriewanne einzusetzen. Auch ein jeweils teilweiser Auftrag auf den Wannenboden und den Batterieboden ist denkbar.

Gemäß der Erfindung wird vor dem Auftragen der Wärmeleitpaste auch ein Abstand zwischen dem Batterieboden und der Auflageebene zumindest an mehreren zweiten Messpunkten gemessen und die Wärmeleitpaste wird in einer Menge auf den Wannenboden aufgetragen, die abhängig von den gemessenen Abständen zwischen dem Batterieboden und der Auflagefläche ist. Auf diese Weise können auch fertigungsbedingte Unebenheiten des Batteriebodens berücksichtigt werden und die aufgetragene Menge an Wärmeleitpaste an diese Unebenheiten angepasst werden. Dabei ist es möglich, dass jedem ersten Messpunkt nach dem Einsetzen der Batterie in die Batteriewanne ein senkrecht über ihm liegender zweiter Messpunkt zugeordnet ist. In den Bereichen zwischen den ersten und den zweiten Messpunkten kann dann die Wärmeleitpaste mit einer Höhe aufgetragen werden, die nach Einsetzen der Batterie in die Batteriewanne und gegebenenfalls Plattdrücken des Materials dem Abstand zwischen dem jeweiligen ersten und dem zweiten Messpunkt entspricht, wenn dieser senkrecht über dem ersten Messpunkt liegt, oder einem näherungsweise, beispielsweise durch Interpolation, ermittelten Abstand zwischen dem jeweiligen ersten Messpunkt und einem senkrecht über ihm liegenden Punkt auf dem Batterieboden.

Gemäß einer Ausführungsform des Verfahrens wird mittels der ersten und mittels der zweiten Messpunkte ein Volumen des Spalts zumindest näherungsweise berechnet und die Wärmeleitpaste wird in einer Menge auf den Wannenboden aufgetragen, deren Volumen dem Volumen des Spalts entspricht. Dabei kann zudem eine Volumenänderung der Wärmeleitpaste durch einen Trocknungs- oder Aushärteprozess berücksichtigt werden.

Die Wärmeleitpaste kann flächig aufgetragen werden und den Wannenboden bzw. den Batterieboden vollständig oder nahezu vollständig bedecken. Es wird jedoch bevorzugt, dass die Wärmeleitpaste in Form von mindestens einer Materialraupe aufgetragen wird, wobei die mindestens eine Materialraupe nicht den gesamten Wannenboden oder den gesamten Batterieboden bedeckt, und dass die mindestens eine Materialraupe zum Ausfüllen des Spalts beim Einsetzen der Batterie in die Batteriewanne zwischen dem Wannenboden und dem Batterieboden plattgedrückt wird. Dabei wird die Tatsache ausgenutzt, dass die Wärmeleitpaste nach dem Auftragen zumindest für eine begrenzte Zeit zähflüssig ist. Das Plattdrücken der mindestens einen Materialraupe sorgt für ein möglichst gleichmäßiges Ausfüllen des Spalts und eine weitgehend flächige Bedeckung des Wannenbodens bzw. des Batteriebodens mit der Wärmeleitpaste. Um die flächige Bedeckung mit der Wärmeleitpaste zu verbessern, wird die mindestens eine Materialraupe zweckmäßig im Bereich der Ecken des Wannenbodens bzw. des Batteriebodens mit einem größeren Querschnitt aufgetragen als in der Mitte. Die Wärmeleitpaste kann in Form einer mäandrierenden bzw. zickzackförmigen Materialraupe oder in Form kurzen Materialraupen aufgetragen werden, wobei letztere bis zur Punktform verkürzt sein können. Es ist jedoch auch möglich, dass die Wärmeleitpaste in Form von mehreren, parallel zueinander verlaufenden Materialraupen aufgetragen wird, wobei der Querschnitt der Materialraupe vorzugsweise in einer Richtung quer zu deren Längserstreckung zu- und/oder abnimmt. Beispielsweise kann mittig eine dickere Materialraupe aufgetragen werden, deren Material beim Einsetzen der Batterie in die Batteriewanne nach außen gepresst wird. Es ist aber auch möglich, dass an einem Rand entlang zur den Wannenboden begrenzenden Kante eine Materialraupe mit großem Querschnitt aufgetragen wird, während parallel zu dieser Materialraupen mit geringerem Querschnitt aufgetragen werden, wobei der Querschnitt vorzugsweise in einer Richtung weg von der erstgenannten Materialraupe abnimmt. Zudem ist es möglich, dass der Querschnitt der Materialraupen in Richtung ihrer Längserstreckung zu- und/oder abnimmt, beispielsweise kontinuierlich abnimmt oder erst bis zu einem Maximum zunimmt und dann abnimmt. Dies ist insbesondere dann vorteilhaft, wenn die Batterie schräg in die Batteriewanne eingesetzt wird, also mit einem spitzen Winkel zwischen dem Batterieboden und dem Wannenboden, wobei die Batterie so eingesetzt wird, dass der Batterieboden zuerst im Bereich des größten Materialquerschnitts aufgesetzt wird und das Material hin zu den kleineren Materialquerschnitten verdrängt. Auch eine Kombination verschiedener Raupengeometrien ist möglich. Zudem kann die Wärmeleitpaste in Form von im Abstand zueinander angeordneten Materialtropfen auf den Wannenboden und /oder den Batterieboden aufgetragen werden. Auch eine Kombination von Materialraupen und Materialtropfen ist möglich.

Zweckmäßig weist die Batterie mindestens zwei im Abstand zueinander angeordnete, die Auflagepunkte aufweisende Absätze auf, auf denen die Batterie mit unterseitigen Auflageflächen aufliegt. Die Batterie kann dann besonders gut definiert bezüglich der Batteriewanne positioniert werden.

Zur Messung des Abstands zwischen dem Wannenboden und der Auflageebene kann ein ortsfester Messsensor verwendet werden. Zweckmäßig wird aber ein den Wannenboden abtastender Messsensor über den Wannenboden an diesem entlang bewegt. Das Abtasten des Wannenbodens kann in einem vom Auftrag der Wärmeleitpaste zeitlich getrennt durchgeführten Verfahrensschritt erfolgen. Es ist jedoch auch möglich, dass der Messsensor zusammen mit einer die Wärmeleitpaste auf den Wannenboden auftragenden Auftragseinrichtung bewegt wird und den Boden vor dem Auftrag der Wärmeleitpaste abtastet. Der Messsensor gibt dann die Messwerte bzw. die ermittelten Abstände zwischen dem Wannenboden und der Auflageebene direkt an eine Steuer- oder Regeleinrichtung weiter, die den Auftrag der Wärmeleitpaste steuert oder regelt. Das Abtasten des Wannenbodens und der Auftrag der Wärmeleitpaste erfolgen dann in einem Arbeitsgang. Dabei ist es möglich, dass der von der Auftragseinrichtung abgegebene Volumenstrom der Wärmeleitpaste in Abhängigkeit von den ermittelten Abständen zwischen dem Wannenboden und der Auflageebene variiert wird. Zweckmäßig wird die Position der Auflageebene im Raum vorgegeben oder gemessen und gespeichert und die Messwerte des Messsensors werden auf die Position der Auflageebene im Raum bezogen.

Zur Kontrolle des Auftrags der Wärmeleitpaste wird zweckmäßig eine Kontur der auf den Wannenboden aufgetragenen Wärmeleitpaste vermessen und mit berechneten Sollwerten verglichen. Dies ermöglicht eine nachträgliche Kontrolle mittels eines Ist-Soll-Wert-Vergleichs, so dass abgeschätzt werden kann, ob die passende Menge an Wärmeleitpaste auf den Wannenboden aufgetragen wurde.

Die erfindungsgemäße Auftragsvorrichtung weist eine bezüglich des Wannenbodens bewegliche Auftragsdüse auf, mit der der Messsensor vorzugsweise mechanisch verbunden ist, so dass er stets mit der Auftragsdüse bewegt wird. Der Messsensor tastet den Wannenboden vor dem Auftrag der Wärmleitpaste ab und ist eingerichtet, den Abstand zum Wannenboden zu bestimmen. Desweiteren ist eine Steuer- oder Regeleinrichtung Bestandteil der Auftragsvorrichtung. Diese ist eingerichtet, den Abstand von zumindest einer Anzahl erster Messpunkte am Wannenboden zur Auflageebene zu bestimmen, die von Auflagepunkten der Batterie auf der Batteriewanne aufgespannt wird. Zudem steuert oder regelt die Steuer- oder Regeleinrichtung den von der Auftragsdüse abgegebenen Volumenstrom der Wärmeleitpaste in Abhängigkeit vom zumindest an den ersten Messpunkten gemessenen Abstand des Wannenbodens zur Auflageebene, um den Spalt zwischen dem Batterieboden und dem Wannenboden möglichst vollständig und ohne Verschwendung von Material zu füllen.

Im Folgenden wird die Erfindung anhand in der Zeichnung schematisch dargestellter Ausführungsbeispiele näher erläutert. Es zeigen
- Fig. 1: eine Batterieanordnung bei der Montage in schematischer Darstellung;
- Fig. 2a, 2b, 2c: drei Varianten einer Materialraupe gemäß einem ersten Ausführungsbeispiel in Draufsicht;
- Fig. 3a, 3b, 3c: eine Anordnung von Materialraupen gemäß einem zweiten Ausführungsbeispiel in Draufsicht und in zwei Seitenansichten aus unterschiedlichen Blickrichtungen und
- Fig. 4a, 4b, 4c: eine Anordnung von Materialraupen gemäß einem dritten Ausführungsbeispiel in Draufsicht und in zwei Seitenansichten aus unterschiedlichen Blickrichtungen.

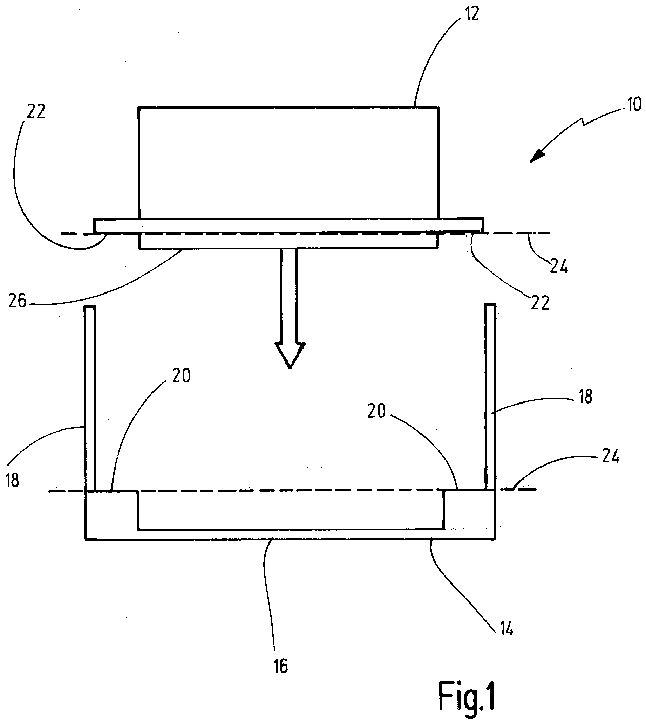

Die in Fig. 1 gezeigte Batterieanordnung 10 ist für den Einsatz als Energiespeicher in einem elektrisch betriebenen Kraftfahrzeug bestimmt. Sie weist eine wiederaufladbare Batterie 12 und eine nach oben offene Batteriewanne 14 zur Aufnahme der Batterie 12 auf. Die Batteriewanne 14 weist einen Wannenboden 16 und vom Wannenboden 16 hochstehende, umlaufende Wannenwände 18 auf. Am Wannenboden 16 sind einander im Abstand gegenüberliegend zwei Absätze 20 angeordnet, auf denen die Batterie 12 im montierten Zustand mit unterseitigen Auflageflächen 22 aufliegt. Die Auflageflächen 22 sowie die Absätze 20 spannen jeweils eine Referenzebene auf, wobei die Referenzebenen im montierten Zustand zu einer Auflageebene 24 zusammen fallen, welche durch die Auflagepunkte aufgespannt wird, an denen die Batterie 12 auf der Batteriewanne 14 aufliegt.

Um Wärme von der Batterie 12 zur Batteriewanne 14 und von dieser zu einem nicht dargestellten Kühler ableiten zu können, wird vor dem Einsetzen der Batterie 12 in die Batteriewanne 14 der Wannenboden 16 mit einer Wärmeleitpaste beschichtet, die einen zwischen dem Wannenboden 16 und dem dem Wannenboden 16 zugewandten Batterieboden 26 freibleibenden Spalt weitgehend ausfüllt und eine gute Wärmeleitung vom Batterieboden 26 zum Wannenboden 16 ermöglicht. Die Breite des Spalts wird vom Abstand des Wannenbodens 16 zur Auflageebene 24 und vom Abstand des Batteriebodens 26 zur Auflageebene 24 festgelegt, wobei sowohl der Wannenboden 16 als auch der Batterieboden 26 Fertigungstoleranzen unterliegen und nicht ideal eben sind. Aus diesem Grund wird vor dem Auftrag der Wärmeleitpaste der Wannenboden 16 mittels eines Messsensors abgetastet und es wird zumindest an mehreren ersten Messpunkten der Abstand des Wannenbodens 16 von der Auflageebene 24 bestimmt. Desweiteren wird auch der Batterieboden 26 mittels des Messsensors abgetastet, und es wird zumindest an einer Anzahl von zweiten Messpunkten der Abstand des Batteriebodens 26 von der Auflageebene 24 bestimmt. Die Menge der aufgetragenen Wärmeleitpaste wird dann in Abhängigkeit von den ermittelten Abständen des Wannenbodens 16 und des Batteriebodens 26 an den ersten bzw. den zweiten Messpunkten von der Auflageebene 24 variiert, so dass die aufgetragene Menge an Wärmeleitpaste den Spalt möglichst vollständig ausfüllt, während möglichst keine überflüssigen Mengen der teuren Wärmeleitpaste aufgetragen werden.

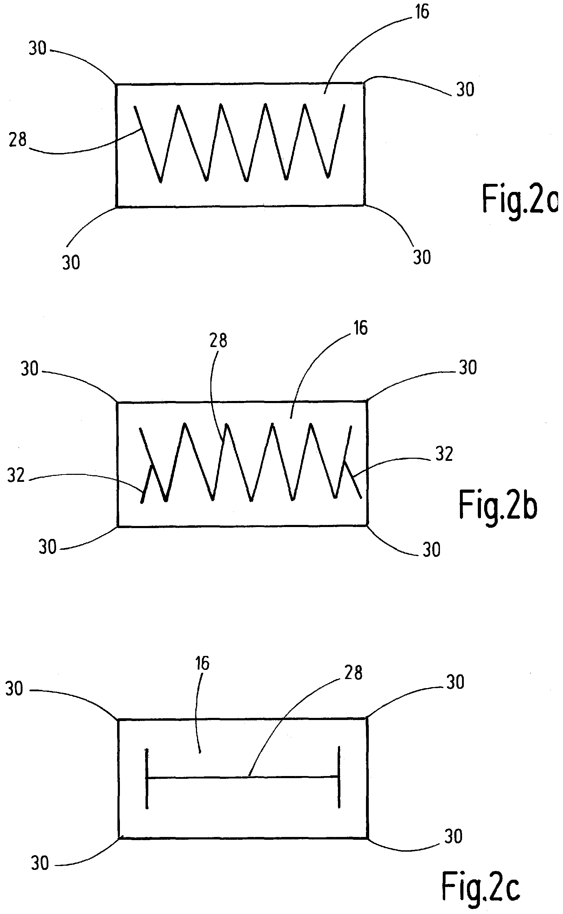

Gemäß Fig. 2a, b, c wird die Wärmeleitpaste in Form einer Materialraupe 28 auf den Wannenboden 16 aufgetragen, die in der Variante gemäß Fig. 2a eine Zickzack-Form aufweist. In der Variante gemäß Fig. 2b ist die Zickzack-Form so modifiziert, dass auch in den in der Zeichnung unten dargestellten Ecken 30 des Wannenbodens 16 aufgrund einer zusätzlich aufgetragenen, sich in Richtung zu den Ecken 30 erstreckenden Teilraupe 32 genügend Wärmeleitpaste aufgetragen wird. Bei der Variante gemäß Fig. 2c weist die Materialraupe 28 in Draufsicht eine H-Form auf und erstreckt sich jeweils weit in Richtung zu den vier Ecken 30 des Wannenbodens 16.

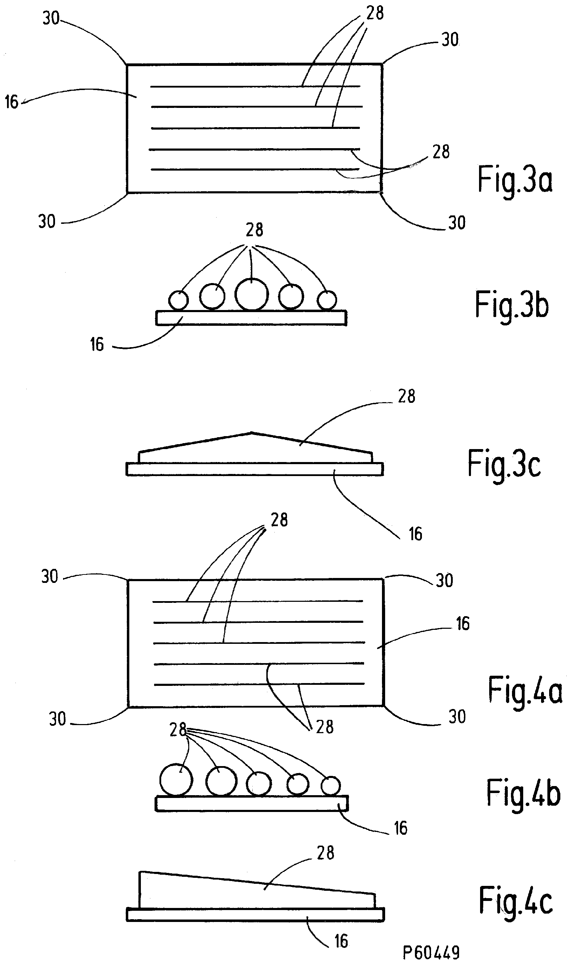

Beim Ausführungsbeispiel gemäß Fig. 3a, 3b, 3c werden mehrere parallel zueinander verlaufende Materialraupen 28 auf den Wannenboden 16 aufgetragen. Wie aus Fig. 3b ersichtlich, weist die Materialraupe 28 in der Mitte den größten Querschnitt auf, und der Querschnitt der Materialraupen 28 verringert sich kontinuierlich in Richtung von der mittleren Materialraupe 28 weg. Wie aus Fig. 3c ersichtlich, nimmt der Querschnitt der Materialraupen 28 in deren Längsrichtung von deren Mitte zu den Enden hin kontinuierlich ab

Beim Ausführungsbeispiel gemäß Fig. 4a, 4b werden ebenfalls mehrere parallel zueinander verlaufende Materialraupen 28 auf den Wannenboden 16 aufgetragen. Die Materialraupe 28 am linken Rand gemäß Fig. 4b weist dabei den größten Querschnitt auf, und der Querschnitt der Materialraupen 28 verringert sich kontinuierlich von dieser Materialraupe 28 weg, ebenso wie der Querschnitt in Längsrichtung der Materialraupen 28 von einem Ende zum anderen kontinuierlich abnimmt (vgl. Fig. 4c).

Beim Einsetzen der Batterie 12 in die Batteriewanne 14 wird bei den Ausführungsvarianten gemäß Fig. 2a, b, c und Fig. 3a, b, c die Batterie 12 mit annähernd zum Wannenboden 16 parallel verlaufendem Batterieboden 26 eingesetzt, und es wird Wärmeleitpaste von der Mitte des Wannenbodens 16 zu dessen Rändern und Ecken 30 hin verdrängt, wenn die Materialraupen 28 plattgedrückt werden. Bei den Ausführungsvarianten gemäß Fig. 4a, b, c wird die Batterie 12 so in die Batteriewanne 14 eingesetzt, dass der Batterieboden 26 zunächst in einem spitzen Winkel zum Wannenboden 16 angeordnet ist und im Bereich der Materialraupen 28 mit größerem Querschnitt zunächst näher am Wannenboden 16 angeordnet ist, so dass Wärmeleitpaste von dort aus in Richtung zur Mitte des Wannenbodens 16 und darüber hinaus verdrängt wird, wenn der Batterieboden 26 bis zur letztendlich parallelen Erstreckung bezüglich des Wannenbodens 16 gekippt wird. Allgemein wird die Batterie 12 stets so in die Batteriewanne 14 eingesetzt, dass der Batterieboden 26 zunächst im Bereich der mit größerer Höhe aufgetragenen Wärmeleitpaste auf dieser aufsitzt.

Zusammenfassend ist folgendes festzuhalten: Die Erfindung betrifft ein Verfahren zum Herstellen einer Batterieanordnung 10, die eine einen Wannenboden 16 aufweisende Batteriewanne 14 und eine in der Batteriewanne 14 aufgenommene Batterie 12 aufweist, wobei die Batterie 12 an eine Auflageebene 24 aufspannenden Auflagepunkten auf der Batteriewanne 14 aufliegt und wobei vor dem Einsetzen der Batterie 12 in die Batteriewanne 14 zum zumindest teilweisen Ausfüllen eines Spalts zwischen einem dem Wannenboden 16 zugewandten Batterieboden 26 und dem Wannenboden 16 eine Wärmeleitpaste auf den Wannenboden 16 und/oder den Batterieboden 26 aufgetragen wird. Erfindungsgemäß ist vorgesehen, dass vor dem Auftragen der Wärmeleitpaste ein Abstand zwischen dem Wannenboden 16 und der Auflageebene 24 zumindest an mehreren ersten Messpunkten ermittelt wird und dass die Wärmeleitpaste in einer Menge auf den Wannenboden 16 und/oder den Batterieboden 26 aufgetragen wird, die abhängig von den ermittelten Abständen zwischen dem Wannenboden 16 und der Auflageebene 24 ist.

## Patentansprüche

1. Verfahren zum Herstellen einer Batterieanordnung (10), die eine einen Wannenboden (16) aufweisende Batteriewanne (14) und eine in der Batteriewanne (14) aufgenommene Batterie (12) aufweist, wobei die Batterie (12) an eine Auflageebene (24) aufspannenden Auflagepunkten auf der Batteriewanne (14) aufliegt, wobei vor dem Einsetzen der Batterie (12) in die Batteriewanne (14) zum zumindest teilweisen Ausfüllen eines Spalts zwischen einem dem Wannenboden (16) zugewandten Batterieboden (26) und dem Wannenboden (16) eine Wärmeleitpaste auf den Wannenboden (16) und/oder den Batterieboden (26) aufgetragen wird, wobei vor dem Auftragen der Wärmeleitpaste ein Abstand zwischen dem Wannenboden (16) und der Auflageebene (24) zumindest an mehreren ersten Messpunkten ermittelt wird, wobei die Wärmeleitpaste in einer Menge auf den Wannenboden (16) und/oder den Batterieboden (26) aufgetragen wird, die abhängig von den ermittelten Abständen zwischen dem Wannenboden (16) und der Auflageebene (24) ist, wobei vor dem Auftragen der Wärmeleitpaste ein Abstand zwischen dem Batterieboden (26) und der Auflageebene (24) zumindest an mehreren zweiten Messpunkten gemessen wird und wobei die Wärmeleitpaste in einer Menge auf den Wannenboden (16) und/oder den Batterieboden (26) aufgetragen wird, die abhängig von den gemessenen Abständen zwischen dem Batterieboden (26) und der Auflageebene (24) ist.

2. Verfahren nach Anspruch 1, **dadurch gekennzeichnet, dass** jedem ersten Messpunkt nach dem Einsetzen der Batterie (12) in die Batteriewanne (14) ein vorzugsweise senkrecht über ihm liegender zweiter Messpunkt zugeordnet ist.

3. Verfahren nach Anspruch 1 oder 2, **dadurch gekennzeichnet, dass** mittels der ersten und mittels der zweiten Messpunkte ein Volumen des Spalts zumindest näherungsweise berechnet wird und dass die Wärmeleitpaste in einer Menge auf den Wannenboden (16) und/oder den Batterieboden (26) aufgetragen wird, deren Volumen, gegebenenfalls nach einem Trocknungs- oder Aushärteprozess, dem Volumen des Spalts entspricht.

4. Verfahren nach einem der vorangehenden Ansprüche, **dadurch gekennzeichnet, dass** die Wärmeleitpaste in Form von mindestens einer Materialraupe (28) auf den Wannenboden (16) und/oder den Batterieboden (26) aufgetragen wird, wobei die mindestens eine Materialraupe (28) nicht den gesamten Wannenboden (16) oder den gesamten Batterieboden (26) bedeckt, und dass die mindestens eine Materialraupe (28) zum Ausfüllen des Spalts beim Einsetzen der Batterie (12) in die Batteriewanne (14) zwischen dem Wannenboden (16) und dem Batterieboden (26) platt gedrückt wird.

5. Verfahren nach Anspruch 4, **dadurch gekennzeichnet, dass** die mindestens eine Materialraupe (28) im Bereich der Ecken (30) des Wannenbodens (16) und/oder des Batteriebodens (26) einen größeren Querschnitt aufweist.

6. Verfahren nach Anspruch 4 oder 5, **dadurch gekennzeichnet, dass** die Wärmeleitpaste in Form von mindestens einer zickzack-förmigen Materialraupe (28) auf den Wannenboden (16) und/oder den Batterieboden (26) aufgetragen wird.

7. Verfahren nach einem der Ansprüche 4 bis 6, **dadurch gekennzeichnet, dass** die Wärmeleitpaste in Form von mehreren, parallel zueinander verlaufenden Materialraupen (28) auf den Wannenboden (16) und/oder den Batterieboden (26) aufgetragen wird, wobei der Querschnitt der Materialraupen (28) in Richtung ihrer Längserstreckung und/oder in einer Richtung quer zu deren Längserstreckung zu- und/oder abnimmt.

8. Verfahren nach einem der vorangehenden Ansprüche, **dadurch gekennzeichnet, dass** die Wärmeleitpaste in Form von im Abstand zueinander angeordneten Materialtropfen auf den Wannenboden (16) und/oder den Batterieboden (26) aufgetragen wird.

9. Verfahren nach einem der vorangehenden Ansprüche, **dadurch gekennzeichnet, dass** die Batteriewanne (14) mindestens zwei im Abstand zueinander angeordnete, die Auflagepunkte aufweisende Absätze (20) aufweist, auf denen die Batterie (12) mit unterseitigen Auflageflächen (22) aufliegt.

10. Verfahren nach einem der vorangehenden Ansprüche, **dadurch gekennzeichnet, dass** zur Messung des Abstands zwischen dem Wannenboden (16) und der Auflageebene (24) ein den Wannenboden (16) abtastender Messsensor über den Wannenboden (16) an diesem entlang bewegt wird.

11. Verfahren nach Anspruch 10, **dadurch gekennzeichnet, dass** der Messsensor zusammen mit einer die Wärmeleitpaste auf den Wannenboden (16) auftragenden Auftragseinrichtung bewegt wird und den Wannenboden (16) vor dem Auftrag der Wärmeleitpaste abtastet.

12. Verfahren nach Anspruch 11, **dadurch gekennzeichnet, dass** der von der Auftragseinrichtung abgegebene Volumenstrom der Wärmeleitpaste in Abhängigkeit von den ermittelten Abständen zwischen dem Wannenboden (16) und der Auflageebene (24) variiert wird.

13. Verfahren nach einem der Ansprüche 10 bis 12, **dadurch gekennzeichnet, dass** die Position der Auflageebene (24) im Raum vorgegeben oder gemessen und gespeichert wird und dass die Messwerte des Messsensors auf die Position der Auflageebene (24) im Raum bezogen werden.

14. Verfahren nach einem der vorangehenden Ansprüche, **dadurch gekennzeichnet, dass** eine Kontur der auf den Wannenboden (16) aufgetragenen Wärmeleitpaste vermessen und mit berechneten Sollwerten verglichen wird.

15. Vorrichtung zum Auftragen einer Wärmeleitpaste auf den Wannenboden (16) einer Batteriewanne (14), die zur Aufnahme einer Batterie (12) bestimmt ist, mit einer bezüglich des Wannenbodens (16) beweglichen Auftragsdüse, mit einem vorzugsweise mit der Auftragsdüse mechanisch verbundenen Messsensor zum Abtasten des Wannenbodens (16) vor dem Auftrag der Wärmeleitpaste, der eingerichtet ist, den Abstand zum Wannenboden (16) zu bestimmen, und mit einer Steuer- oder Regeleinrichtung, die eingerichtet ist, den Abstand von zumindest einer Anzahl erster Messpunkte am Wannenboden (16) zu einer Auflageebene (24), die von Auflagepunkten der Batterie (12) auf der Batteriewanne (14) aufgespannt wird, zu bestimmen und den von der Auftragsdüse abgegebenen Volumenstrom der Wärmeleitpaste in Abhängigkeit vom zumindest an den ersten Messpunkten gemessenen Abstand des Wannenbodens (16) zur Auflageebene (24) zu steuern oder zu regeln.

## Claims

1. Method for production of a battery arrangement (10), which has a battery tray (14) provided with a tray bottom (16) and a battery (12) accommodated in the battery tray (14), wherein the battery (12) bears on the battery tray (14) at support points spanning a support plane (24), wherein a heat-conducting paste is applied on the tray bottom (16) and/or on the battery bottom (26) for at least partial filling of a gap between a battery bottom (26) facing the tray bottom (16) and the tray bottom (16) before the insertion of the battery (12) into the battery tray (14), wherein a distance between the tray bottom (16) and the support plane (24) is determined at least at several first measurement points before the application of the heat-conducting paste, wherein the heat-conducting paste is applied on the tray bottom (16) and/or the battery bottom (26) in a quantity that is dependent on the determined distances between the tray bottom (16) and the support plane (24), wherein a distance between the battery bottom (26) and the support plane (24) is measured at least at several second measurement points before the application of the heat-conducting paste, and wherein the heat-conducting paste is applied on the tray bottom (16) and/or on the battery bottom (26) in a quantity that is dependent on the measured distances between the battery bottom (26) and the support plane (24).

2. Method according to claim 1, **characterized in that,** after insertion of the battery (12) into the battery tray (14), each first measurement point is assigned a second measurement point preferably located perpendicularly above it.

3. Method according to claim 1 or 2, **characterized in that** a volume of the gap is calculated at least approximately by means of the first and by means of the second measurement points, and **in that** the heat-conducting paste is applied on the tray bottom (16) and/or on the battery bottom (26) in a quantity whose volume, if necessary after a drying or curing process, corresponds to the volume of the gap.

4. Method according to one of the preceding claims, **characterized in that** the heat-conducting paste is applied on the tray bottom (16) and/or on the battery bottom (26) in the form of at least one material bead (28), wherein the at least one material bead (28) does not cover the entire tray bottom (16) or the entire battery bottom (26), and **in that** the at least one material bead (28) is pressed flat between the tray bottom (16) and the battery bottom (26) for filling of the gap during insertion of the battery (12) into the battery tray (14).

5. Method according to claim 4, **characterized in that** the at least one material bead (28) has a larger cross section in the region of the corners (30) of the tray bottom (16) and/or of the battery bottom (26).

6. Method according to claim 4 or 5, **characterized in that** the heat-conducting paste is applied on the tray bottom (16) and/or on the battery bottom (26) in the form of at least one zig-zag-shaped material bead (28).

7. Method according to one of claims 4 to 6, **characterized in that** the heat-conducting paste is applied on the tray bottom (16) and/or on the battery bottom (26) in the form of several material beads (28) extending parallel to one another, wherein the cross section of the material beads (28) increases and/or decreases in the direction of their longitudinal extent and/or in a direction perpendicular to their longitudinal extent.

8. Method according to one of the preceding claims, **characterized in that** the heat-conducting paste is applied on the tray bottom (16) and/or on the battery bottom (26) in the form of material drops disposed at a distance relative to one another.

9. Method according to one of the preceding claims, **characterized in that** the battery tray (14) has at least two shoulders (20) disposed at a distance from one another and provided with support points, on which the battery (12) bears with support surfaces (22) on the underside.

10. Method according to one of the preceding claims, **characterized in that** a measuring sensor scanning the tray bottom (16) is moved over the tray bottom (16) and along it for measurement of the distance between the tray bottom (16) and the support plane (24).

11. Method according to claim 10, **characterized in that** the measuring sensor is moved together with an applicator applying the heat-conducting paste onto the tray bottom (16) and scans the tray bottom (16) before the application of the heat-conducting paste.

12. Method according to claim 11, **characterized in that** the volume flow of the heat-conducting paste discharged by the applicator is varied in dependence on the determined distances between the tray bottom (16) and the support plane (24).

13. Method according to one of claims 10 to 12, **characterized in that** the position of the support plane (24) in space is predetermined or measured and stored, and **in that** the measured values of the measuring sensor are referred to the position of the support plane (24) in space.

14. Method according to one of the preceding claims, **characterized in that** a contour of the heat-conducting paste applied on the tray bottom (16) is surveyed and compared with calculated target values.

15. Apparatus for application of a heat-conducting paste onto the tray bottom (16) of a battery tray (14), which is intended for accommodation of a battery (12), with an application nozzle that can be moved relative to the tray bottom (16), with a measuring sensor, which is preferably connected mechanically to the application nozzle, for scanning the tray bottom (16) before the application of the heat-conducting paste and which is set up to determine the distance to the tray bottom (16), and with a control or regulating device, which is set up to determine the distance of at least a number of first measurement points on the tray bottom (16) to a support plane (24), which is spanned by support points of the battery (12) on the battery tray (14) and to control or regulate the volume flow of the heat-conducting paste discharged by the application nozzle in dependence on the distance, measured at least at the first measurement points, of the tray bottom (16) to the support plane (24).

## Revendications

1. Procédé de fabrication d'un agencement (10) de batterie comprenant un bac (14) muni d'un fond (16), et une batterie (12) logée dans ledit bac (14), laquelle batterie (12) repose sur ledit bac (14) en des points d'appui sous-tendant un plan d'appui (24), sachant que, préalablement à l'insertion de la batterie (12) dans le bac (14) de ladite batterie, une pâte thermoconductrice est déposée sur le fond (16) dudit bac et/ou sur un fond (26) de ladite batterie, en vue de combler au moins partiellement un espace interstitiel entre ledit fond (16) du bac et ledit fond (26) de la batterie pointant vers ledit fond (16) dudit bac, sachant que, préalablement à l'application de ladite pâte thermoconductrice, une distance est définie, au moins en plusieurs premiers points de mesure, entre le fond (16) du bac et le plan d'appui (24), ladite pâte thermoconductrice étant déposée, sur ledit fond (16) du bac et/ou sur le fond (26) de la batterie, en une quantité tributaire des distances définies entre ledit fond (16) dudit bac et ledit plan d'appui (24), sachant que, préalablement à l'application de ladite pâte thermoconductrice, une distance est mesurée, au moins en plusieurs seconds points de mesure, entre le fond (26) de la batterie et le plan d'appui (24), ladite pâte thermoconductrice étant déposée, sur ledit fond (16) du bac et/ou sur ledit fond (26) de la batterie, en une quantité tributaire des distances mesurées entre ledit fond (26) de la batterie et ledit plan d'appui (24).

2. Procédé selon la revendication 1, **caractérisé par le fait qu'**à l'issue de l'insertion de la batterie (12) dans le bac (14) de ladite batterie, un second point de mesure est associé à chaque premier point de mesure, de préférence perpendiculairement en surplomb de ce dernier.

3. Procédé selon la revendication 1 ou 2, **caractérisé par le fait qu'**un volume de l'espace interstitiel est calculé, au moins approximativement, au moyen des premiers et au moyen des seconds points de mesure ; et **par le fait que** la pâte thermoconductrice est déposée, sur le fond (16) du bac et/ou sur le fond (26) de la batterie, en une quantité dont le volume correspond audit volume de l'espace interstitiel, le cas échéant après un processus de séchage ou un processus de durcissement.

4. Procédé selon l'une des revendications précédentes, **caractérisé par le fait que** la pâte thermoconductrice est déposée sous la forme d'au moins un cordon de matière (28), sur le fond (16) du bac et/ou sur le fond (26) de la batterie, lequel cordon de matière (28), à présence minimale, ne recouvre pas l'intégralité dudit fond (16) du bac ou l'intégralité dudit fond (26) de la batterie ; et **par le fait que**, lors de l'insertion de la batterie (12) dans le bac (14) de ladite batterie, ledit cordon de matière (28) à présence minimale est pressé à plat entre ledit fond (16) du bac et ledit fond (26) de la batterie, afin de combler l'espace interstitiel.

5. Procédé selon la revendication 4, **caractérisé par le fait que** le cordon de matière (28), à présence minimale, possède une section transversale plus accentuée dans la région des coins (30) du fond (16) du bac et/ou du fond (26) de la batterie.

6. Procédé selon la revendication 4 ou 5, **caractérisé par le fait que** la pâte thermoconductrice est déposée sous la forme d'au moins un cordon de matière (28) en zigzag, sur le fond (16) du bac et/ou sur le fond (26) de la batterie.

7. Procédé selon l'une des revendications 4 à 6, **caractérisé par le fait que** la pâte thermoconductrice est déposée, sur le fond (16) du bac et/ou sur le fond (26) de la batterie, sous la forme de plusieurs cordons de matière (28) s'étendant parallèlement les uns aux autres, sachant que la section transversale desdits cordons de matière (28) croît et/ou décroît dans la direction de leur étendue longitudinale et/ou dans une direction transversale par rapport à leur étendue longitudinale.

8. Procédé selon l'une des revendications précédentes, **caractérisé par le fait que** la pâte thermoconductrice est déposée, sur le fond (16) du bac et/ou sur le fond (26) de la batterie, sous la forme de gouttes de matière situées à distance les unes des autres.

9. Procédé selon l'une des revendications précédentes, **caractérisé par le fait que** le bac (14) de la batterie comporte au moins deux décrochements (20) qui sont situés à distance l'un de l'autre, présentent les points d'appui, et sur lesquels ladite batterie (12) repose par des surfaces inférieures d'appui (22).

10. Procédé selon l'une des revendications précédentes, **caractérisé par le fait que**, pour mesurer la distance entre le fond (16) du bac et le plan d'appui (24), un capteur de mesure balayant ledit fond (16) du bac est mis en mouvement au-dessus dudit fond (16) du bac, le long de ce dernier.

11. Procédé selon la revendication 10, **caractérisé par le fait que** le capteur de mesure est mis en mouvement conjointement à un appareil applicateur déposant la pâte thermoconductrice sur le fond (16) du bac, et balaie ledit fond (16) du bac préalablement à l'application de ladite pâte thermoconductrice.

12. Procédé selon la revendication 11, **caractérisé par le fait que** le débit volumique de la pâte thermoconductrice, dispensé par l'appareil applicateur, est modifié en fonction des distances spécifiées entre le fond (16) du bac et le plan d'appui (24).

13. Procédé selon l'une des revendications 10 à 12, **caractérisé par le fait que** l'emplacement du plan d'appui (24) dans l'espace est préétabli ou mesuré, et mémorisé ; et **par le fait que** les valeurs mesurées du capteur de mesure sont rapportées audit emplacement du plan d'appui (24) dans l'espace.

14. Procédé selon l'une des revendications précédentes, **caractérisé par le fait qu'**un profil de la pâte thermoconductrice, déposée sur le fond (16) du bac, est mesuré et comparé à des valeurs de consigne calculées.

15. Dispositif dévolu à l'application d'une pâte thermoconductrice sur le fond (16) d'un bac (14) destiné à recevoir une batterie (12), comprenant une buse applicatrice douée de mobilité par rapport au fond (16) dudit bac ; un capteur de mesure relié de préférence mécaniquement à ladite buse applicatrice, conçu pour balayer ledit fond (16) du bac préalablement à l'application de ladite pâte thermoconductrice, et agencé pour déterminer la distance par rapport audit fond (16) du bac ; et un appareil de commande ou de régulation qui est agencé pour déterminer la distance séparant au moins un certain nombre de premiers points de mesure, sur ledit fond (16) du bac, d'avec un plan d'appui (24) sous-tendu par des points d'appui de ladite batterie (12), sur ledit bac (14) de la batterie, et pour commander ou pour réguler le débit volumique de la pâte thermoconductrice, dispensé par ladite buse applicatrice, en fonction de la distance qui sépare ledit fond (16) dudit bac d'avec ledit plan d'appui (24), et est mesurée au moins auxdits premiers points de mesure.
